# EUROPEAN PATENT SPECIFICATION

(11) **EP 0 559 638 B1**
(45) Date of publication and mention of the grant of the patent: **22.05.1996**
(21) Application number: 90917374.2
(22) Date of filing: 27.11.1990
(51) Int. Cl.: F24J 2/18, F24J 2/10, F24J 2/52, G02B 17/06

(54) **RADIATION COLLECTION AND CONCENTRATION SYSTEM**
STRAHLUNGSKOLLEKTOR UND -KONZENTRATOR
SYSTEME CAPTEUR ET CONCENTRATEUR DE RAYONNEMENT

(43) Date of publication of application: 15.09.1993
(73) Proprietor: KLEIN, Ernest, J., Manitoba R3C 4B3 (CA)
(72) Inventor: KLEIN, Ernest, J., Manitoba R3C 4B3 (CA)
(74) Representative: Dreiss, Fuhlendorf & Steimle Patentanwälte
(86) International application number: CA9000418
(87) International publication number: WO9209856

(56) References cited:
- EP-A- 0 194 820
- WO-A-83/01830
- US-A- 2 534 543
- US-A- 3 085 565
- US-A- 4 131 485
- US-A- 4 837 451

## Description

### BACKGROUND OF THE INVENTION

This invention relates to an apparatus for collection and concentration of electro-magnetic radiation.

Devices of this type are well known and are used in a wide range of situations for collection and concentration of sunlight or other radiation.

Solar arrays of various designs have been developed in the past including planar arrays evolved from a basic solar cell matrix with a cover glass and those using various methods of optical incident radiation concentration on the elements of the array matrix for example solid metal reflectors and fresnel or double convex lens systems.

Metal reflectors whether they are of the open trough or parabolic dish collector design have a particular weakness, that is the capture angle of dispersed solar radiation is limited, resulting in a substantial loss, typically twenty percent. Fresnel lenses, in addition to the above indicated weakness have thermal cracking problems. The indicated incident radiation angular acceptance limitation has led to the development of sun tracking systems. However such systems having reasonably high concentration ratios have massive mechanical tracking system components and hence are extremely expensive, difficult to manufacture and complex to install.

One example of an advanced solar tracking system has been developed by Dr. Kei Mori of the KEIO University in Tokyo which is known as the "HIMAWARI" or "SUNFLOWER". This system uses fibre optics to reduce mass but still requires a large tracking system for tracking the sun's altitude and azimuth thus traversing the primary collector system.

Patent specification US-A-4 131 485 describes an apparatus for collection and concentration of electromagnetic radiation comprising a primary reflector having a reflective surface which is fixed, defines a substantially longitudinal axis to allow the radiation to enter from that one side and to be reflected generally toward the longitudinal axis, a secondary reflector mounted adjacent the axis and having an external reflective surface, and a third reflector having a concave reflective surface mounted so as to receive the radiation from the second reflector and shaped to converge the radiation by reflection toward a focus for collection.

It is one object of the present invention, therefore, to provide an improved static-aperture collection and concentration system for electro-magnetic radiation such as solar energy.

According to the invention, therefore, there is provided an apparatus for collection and concentration of electromagnetic radiation comprising a primary reflector having a reflective surface which is fixed, having a substantially longitudinal axis parallel to the longitudinal extension of the surface which is open to one side to allow the radiation to enter from that one side and to be reflected generally toward the longitudinal axis, a secondary reflector mounted coaxial to the axis and having an external reflective surface which is generally conical so as to converge from a wider end surrounding the axis toward a narrower end and is shaped and arranged so as to reflect radiation from the primary reflector in a direction substantially parallel to the axis, and a third reflector having a concave reflective surface mounted so as to receive the radiation from the second reflector and shaped to converge the radiation by reflection toward a focus for collection.

The system therefore has the advantage that the primary reflector remains stationary and focusing of the system to accomodate sources of the radiation at different positions relative to the primary reflector is effected by movement of the secondary reflector.

This can allow the system to be simpler in construction, in many cases portable and relatively inexpensive.

Embodiments of the invention will now be described in conjunction with the accompanying drawings in which:
Figure 1 is a block diagram of a total system of concentrator and energy control.
Figure 2 is a horizontal cross-sectional view through a single solar collector according to the present invention, the cross-section being taken along the lines 2-2 of Figure 3.
Figure 2A is another view through a single solar collector according to the invention.
Figure 3 is a cross-sectional view along the lines 3-3 of Figure 2.
Figure 4 is an end elevational view of the collector of Figure 2, the end elevational view taken along the lines 4-4 of Figure 3.
Figure 5 is a front elevational view of the collector of Figure 2.
Figure 6 is a cross-sectional view taken in the plane of Figure 3 showing a modified design on an enlarged scale.
Figure 7 is a schematic illustration of the primary reflector in plan showing angles of incidence and reflection therein.

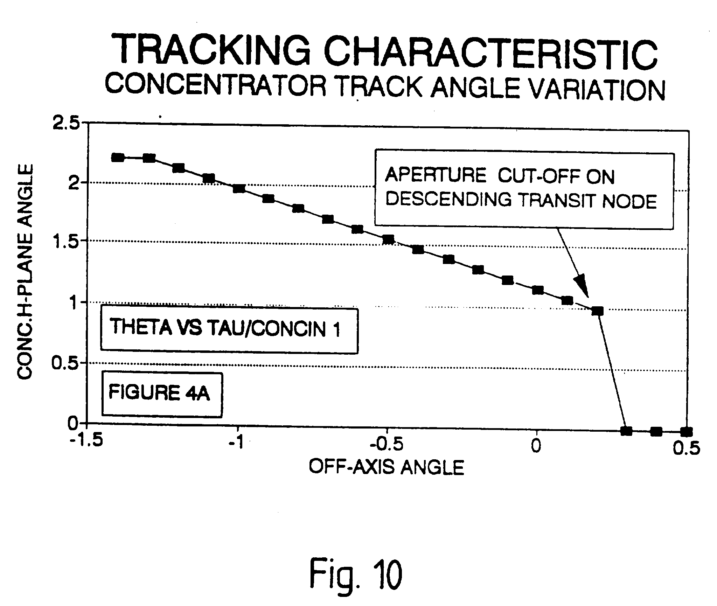

Figures 8, 9 and 10 show the result of calculations for the required profile of the secondary reflector.

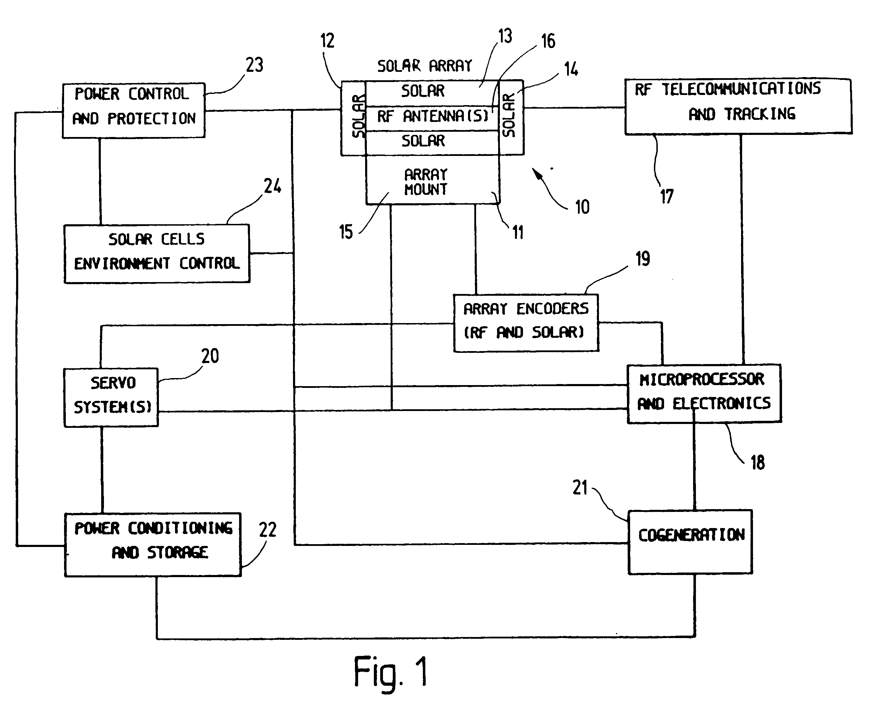

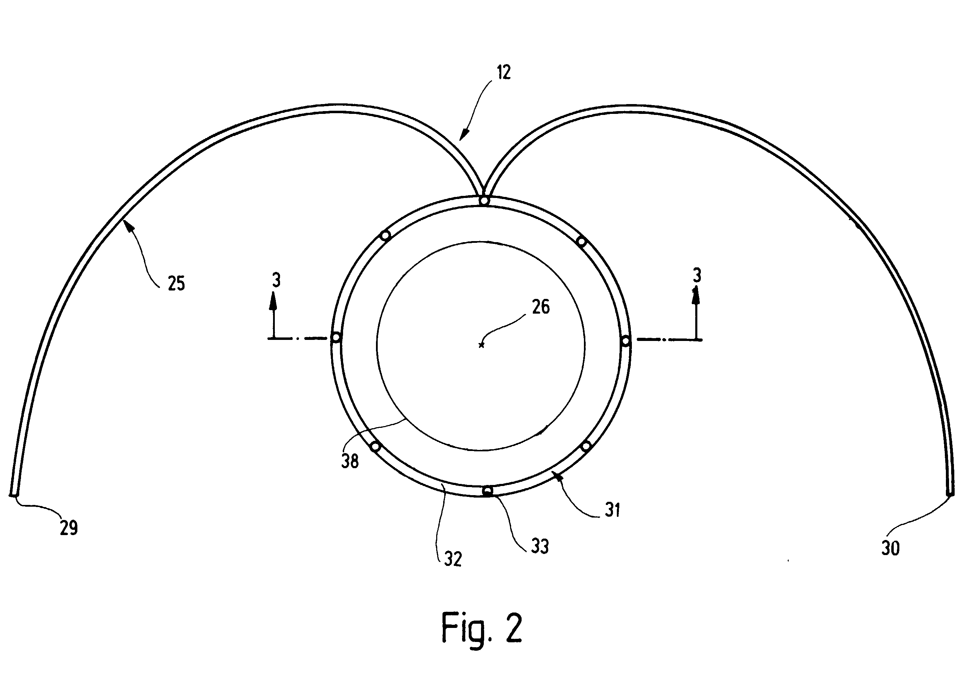

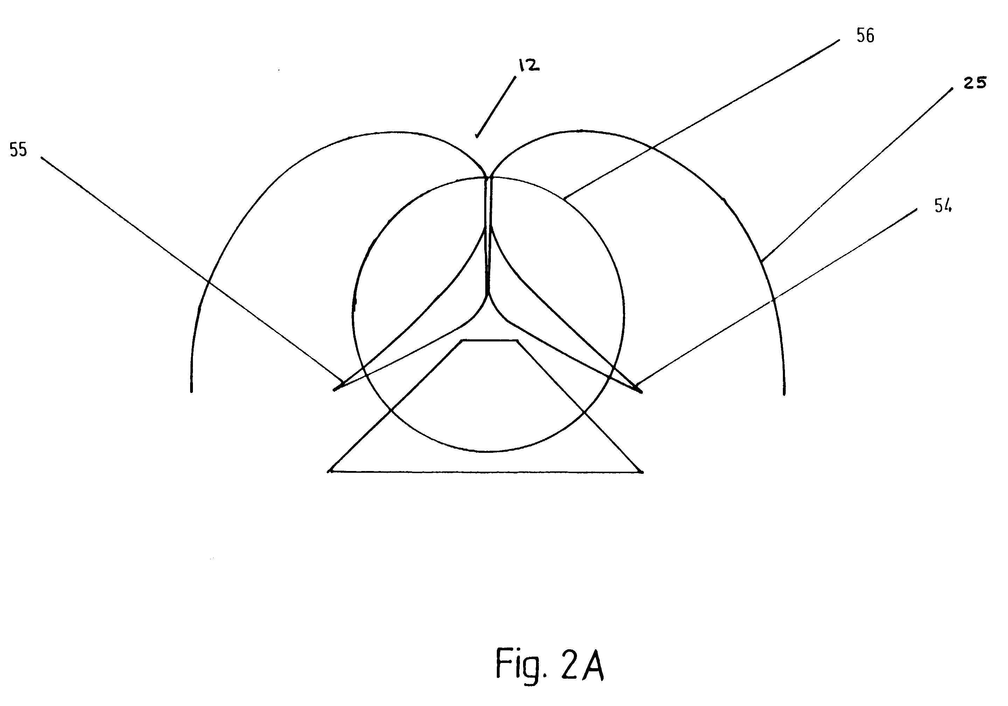

An overview of the system is shown in Figure 1 in which the main radiation collection and concentration system is generally indicated at 10 and comprises an array mount 11 which supports four solar collectors 12, 13, 14 and 15 arranged in a rectangular array surrounding a central section 16 which is constituted by one or more radio frequency antennas. One of the solar collectors 12, 13, 14 or 15 is shown in more detail in Figures 2 through 6.

The further parts of the system are schematically indicated and include a radio frequency telecommunications and tracking system generally indicated at 17 which is arranged to receive information from the antennas 16 for transmission to a microprocessor and an electronics control system 18. The system further includes array control systems generally indicated at 19 including servo systems 20 which operate the tracking motors as described hereinafter.

The solar energy collected by the collectors 12, 13, 14 and 15 is transmitted to a cogeneration system 21 which constitutes the systems for using the heat energy obtained from the solar collector either for generation of electrical power or for use in heat exchange systems or for direct heat usage as described hereinafter.

The electrical generation systems further include a power conditioning and storage system indicated at 22 which incorporates a power control and protection system 23. The system further includes solar cell environmental control systems indicated at 24 for controlling for example the temperature of the solar cells to ensure that operating parameters are not exceeded due to wide fluctuations in energy produced by the solar collection systems.

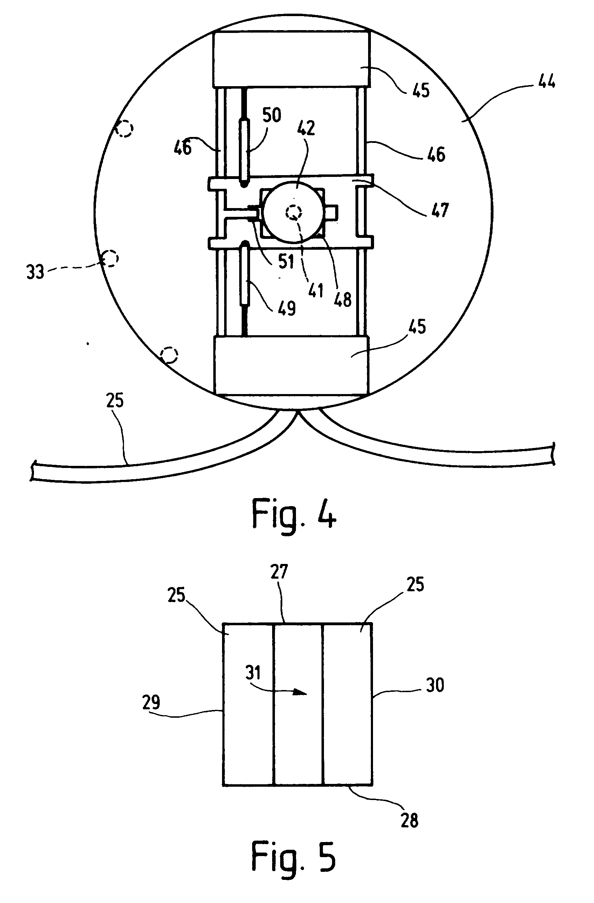

One of the solar collection devices 12, 13, or 14 is shown in more detail in Figures 2, 3, 4 and 5. The collection device generally indicated at 12 comprises a primary reflector arrangement 25 formed in two halves arranged symmetrically about an axis schematically indicated at 26 of the collection system. Each of the halves of the primary reflector is defined by a cylindrical body with the generator curve of the cylindrical body formed by the involute of an imaginary circle formed around the axis 26. Each half of the reflector is thus formed by a plurality of straight lines parallel to the axis 26 with the ends of the straight lines lying on the curve defined by the involute of the circle. A front view of the primary reflector is thus shown in Figure 5 where the two halves are visible at 25 thus forming a rectangular collection zone defined by a top edge 27, a bottom edge 28 and two outer edges 29 and 30 of the reflectors 25.

The main structural members of the collector are provided by a squirrel cage arrangement 31 defined by annular end members 32 and a plurality of bars arranged around the annular end members 32, each of the bars being parallel to the axis 26 thus forming a cylinder surrounding the axis 26. The bars are indicated at 33.

Within the structural support 31 is mounted the further collection system defined by a secondary reflector 35, a third reflector 36 and a fourth reflector 37.

The secondary reflector 35 is generally conical in shape thus forming an outwardly facing conical reflection surface 38 converging from a base 39 to an apex generally indicated at 40. The secondary reflector 35 is mounted upon an axle member 41 driven by a motor 42 to cause rotation of the axle member about its axis and thus rotating the conical secondary reflector about the same longitudinal axis.

Adjacent the apex is provided a spherical bearing 43 which allows the apex section of the conical secondary reflector to rotate about a central point lying on the axis of the conical shape. The spherical bearing can provide highly accurate movement of the secondary reflector so that its position is carefully controlled in the movement about the centre of rotation defined by the centre of the spherical bearing. The movement is obtained by movement of the axle member 41 and the motor 42 about two orthogonal axis as best shown in Figure 4.

At the end of the support structure 31 adjacent the base of the conical secondary reflector is provided an end plate 44 on which is mounted a pair of mounting blocks 45 at diametrically opposed locations on the circular end plate 44. The mounting blocks 45 carry a pair of guide rails 46 which allow sliding movement of essential support 47 in a direction parallel to the guide rails 46 and at right angles to the blocks 45. Upon the central support 47 is mounted the motor 42 carried upon a secondary support 48 slidable relative to the support 47 at right angles to the guide rails 46 to provide the second direction of movement of the motor 42 relative to the end plate 44. Actuation of the movement is controlled by hyraulic cylinders 49, 50 and 51 under control of the servo systems 20 shown in Figure 1.

The motor 42 is coupled to the axle member 41 by a universal joint 52 so that the motor can move substantially in a plane of the end disc 44 while the axle member is controlled in its movement by the spherical bearing 43 so that it can take up any location within a cone defined by dotted lines 53 which converge at the centre of rotation of the spherical bearing 43.

The external shape of the secondary reflector is shown in cross section in Figure 2 and is basically conical but may comprise two outwardly projecting wings arranged at diametrically opposed locations.

The secondary reflector is thus movable both by rotation about the axis and by movement of the axis as previously described to accomodate differences in location of the source of the radiation (for example the sun) relative to the primary reflector. Thus the compound movement of the axis can track the location of the sun under control of the control microprocessor 18. The geographic and geocentric coordinates of the device can be obtained by the R.F. telecommunications and tracking system 17 and from that location in conjunction with information concerning the time and date, the exact path of the sun or other source can retract by the compound movement of the secondary reflector while the primary reflector remains stationary. The shape and movement of the secondary reflector are arranged so that the radiation reflected inwardly from the primary reflector engages the secondary reflector and is reflected thereby in a direction parallel to the axis 26. The third reflector 36 is a part spherical concave surface which thus reflects the axially travelling radiation radially inwardly toward a focus schematically indicated at 58. The third reflector remains fixed and the only control of the radiation is provided by the movement to the secondary reflector.

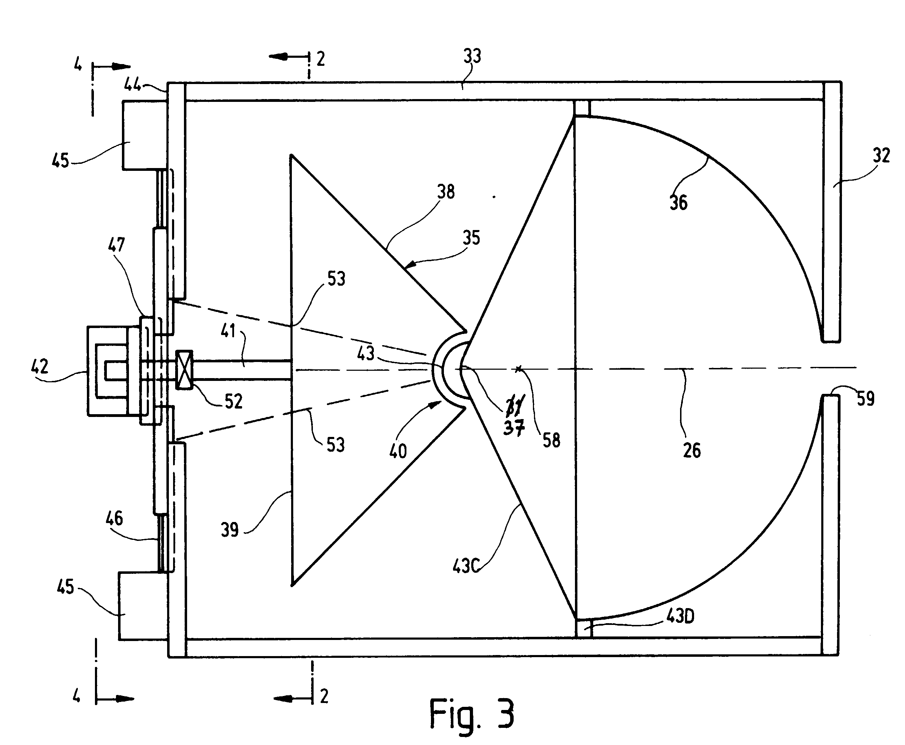

In the embodiment shown in Figure 3, a fourth reflector 37 is provided which is again a concave surface of part spherical construction having a focus coincident with the focus 58 of the third reflector. The fourth reflector thus receives the radiation passing through the focus 58 and reflects it in a direction parallel to the axis 26 but concentrated to an area significantly reduced relative to the area of incidence of the third reflector. The radiation can thus pass axially along the device to a receptor opening 59.

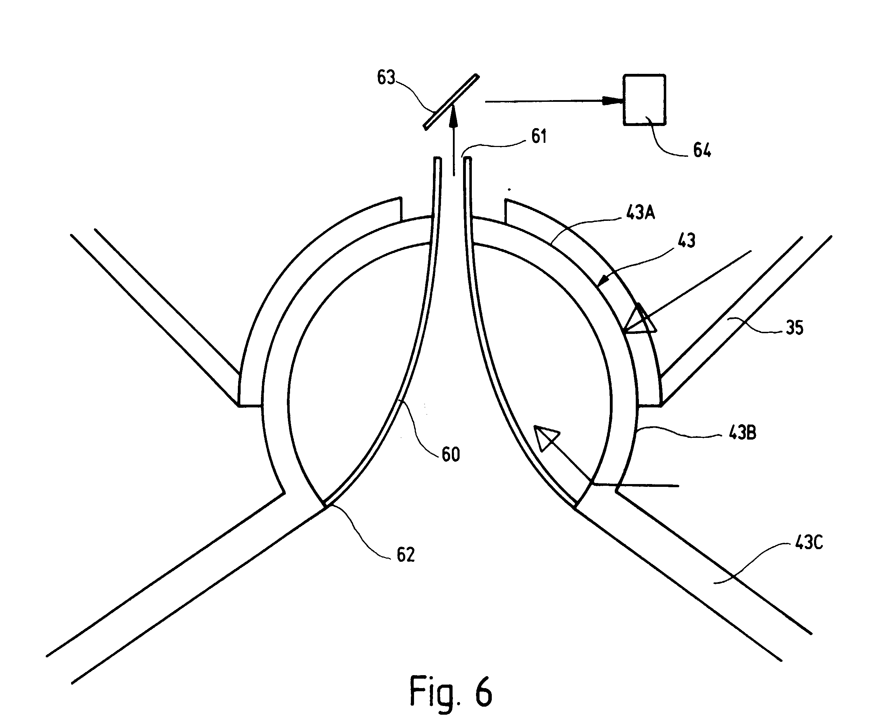

In Figure 6 is shown an alternative arrangement in which the the fourth reflector 37 is replaced by a tunnel receptor 60 so that instead of the radiation being reflected through the opening 59, the radiation is collected along the tunnel receptor 60 which converges to a narrow discharge end 61 from a wider receiving end 62 thus concentrating the radiation to yet higher contrentation ratio. An angled reflector 63 can be provided to turn the radiation to a receptor 64 of conventional type. The profile of the tunnel receptor 60 is exponential so as to rapidly converge the radiation with fewest numbers of reflections to thus reduce losses to a minimum.

Also shown in Figure 6 on an enlarged scale is the construction of the spherical bearing 43 including a part spherical housing 43A at the apex of the second reflector 35 and a convex mounting member 43B. The mounting member defining the spherical bearing portion 43B is carried on a plurality of support struts 43C extending from a support ring 43D which mounts the outermost edge of the third reflector and accurately locates the support member 43B and its axis of rotation of the secondary reflector 35.

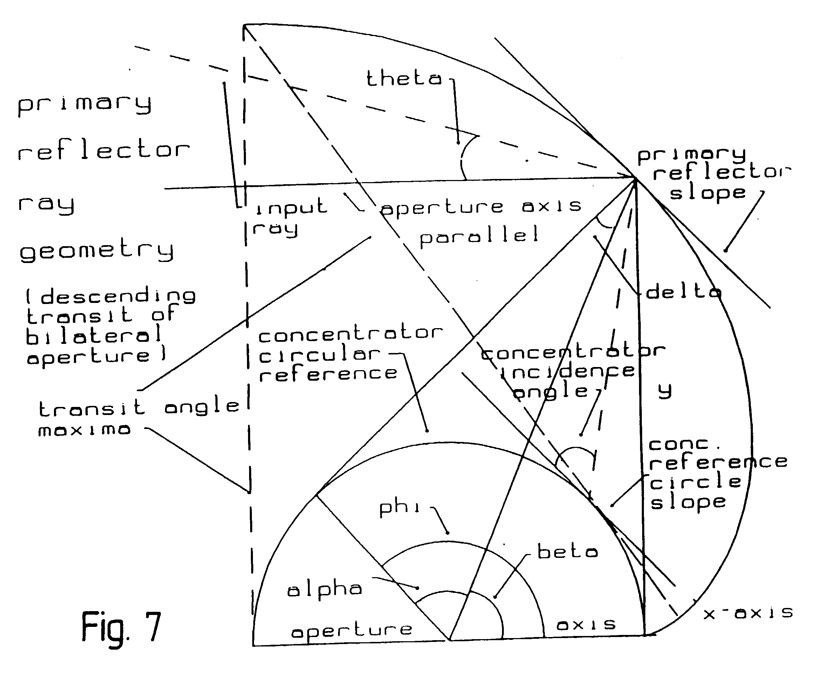

Turning firstly to Figure 7, considering the radiation source transit in a time position where the left lateral aperture and the concentrator cage (circle reference) are blocked by the right lateral reflector, the input ray maximum parallel reflector, the input ray maximum parallel to the *aperture* plane describes this condition and is that position of the input ray at -90° in the H-plane and 0° in the E-plane with respect to the axial boresight of the bilateral aperture. The ray geometry shows the result of ray incidence and reflection at the primary aperture, in accordance with the slope of reflector at that point, and incident on a concentrator reference circle at an angle to the slope of the reference circle at that point.

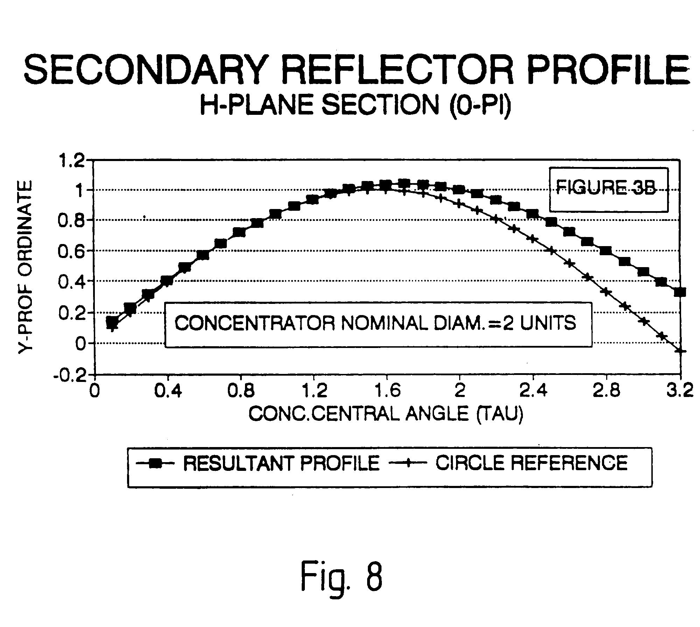

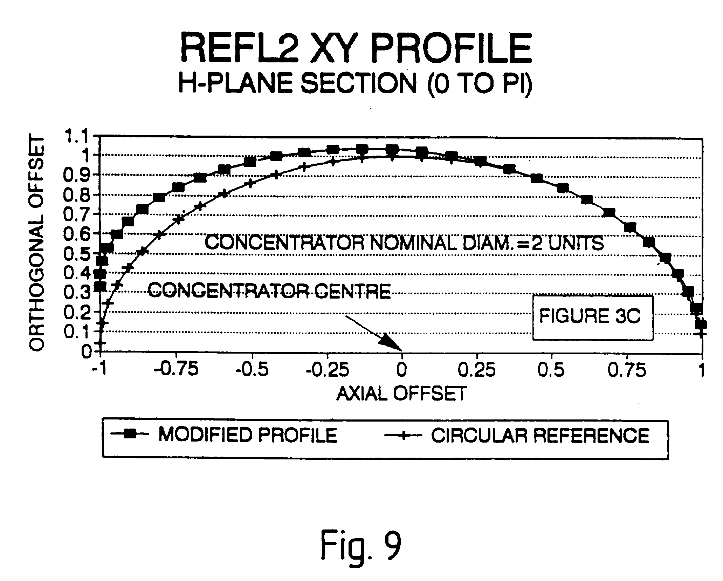

Development of an aperture transit radiation capture pattern matrix yielded data of concentrator secondary reflector incidence angle variation, angle concin 1 shown in figure 7, with respect to concentrator central angle, tau, where tau, contained within the angle beta shown in Figure 7, is the angle measured from the concentrator centre to the point of incidence on the concentrator circular reference. The variation in concinl was found to have a correlation function associated with the aperture radiation input angle, theta. A mathematical function could therefore be defined for the required shape of the secondary reflector and its tracking rotation characteristic. The resultant correction profile, shown in Figures 8 and 9, and the required tracking function, shown in Figure 2, were derived from the defined mathematical function and its use in further data derivation.

The operation of the system is as follows:

The reflected ray from the primary reflector passes through the interstitial areas between the bars 33. The input ray is then incident on the secondary reflector. Considering the position of the second reflector rotation shaft, the incident ray will be reflected from the 45 degree slope of the secondary reflector in a ray path parallel to the axis so as to strike the spherical third reflector. The ray path enters the third reflector perpendicular to the plane of the third reflector aperture. The reflection from the third reflector passes through its focus and is incident upon the fourth reflector. The ray reflected from the fourth reflector is parallel to the axis and exits at the concentrator output port. Any change in the aperture ray input angle from 0 in the horizontal plane of the aperture axial boresight results in an incidence angle shift in the horizontal plane of the secondary reflector. The modified secondary reflector in its horizontal plane profile compensates for any changes in the aperture input radiation angle. Departures of radiation angle input from 0 in the aperture elevation plane are accomodated by a shift in the angular change of the secondary reflector axis from the main axis 26. The required angular change in the position of the secondary reflector axis is accomplished by the rotational shift capability of the micro positioner described previously. It should be noted that the input radiation at an angle above or below the horizontal plane of the aperture boresight results in an angular change at the secondary reflector at an angle below or above the horizontal plane of the secondary reflector for radiation reflected from the primary reflector at an angle above the horizontal plane of the secondary reflector above (below) the horizontal plane on the directly illuminated portion of the secondary reflector. The input radiation angular offset is compensated by the angular rotation and angular shift of the axis of rotation of the secondary reflector. The required aperture planar input to the third reflector is maintained. The highest concentration is obtained by the exponentially tapered circular wave guide "tunnel" receptor format. The input flare angle of the circular wave guide is determined by the third reflector required inverse gain ratio compared to the output of the circular wave guide.

The earlier reference program-track data is derived from known satellite positions, use of phased array for local hour angle and declination determination and computation of geo-centric and geographic coordinates from that information.

Figure 1 shows the required subsystems for operation in systems total environment capability.

The following subsystem descriptions apply to all formats of the implementation of the system although most critical in hybrid photovoltaic with thermal cogeneration and high energy applications. Due to the high level of incident radiation on the solar cells , the resultant heating of the cells must be maintained within temperature bounds defined as being those at which the solar cells are not damaged, provide maximization of solar cell efficiency and allow consideration of the use of thermal cogeneration systems.

Thermal control of the solar cells and their environment is affected by solar cell environment subsystem shown in Figure 1. The subsystem control is derived from the microprocessor system input/output through the associated electronic subsystem shown in Figure 1. Input data is obtained from the sensors of the environment control subsystem. Output data through the electronic subsystem controls valve, etc of the solar cell heat exchanger and other cogeneration system heat exchanger controls.

The microprocesor subsystem provides program-track data for the servo system of the secondary reflector. Input data is obtained from the radio frequency phased array.

The power conditioning subsystem shown in Figure 1 effects any conversion of voltage and frequency that may be required.

Applications of the system include, but are not limited to, remote sight power generation and/or integrated system packages for telecommunications, telemetry and telecommand, avionics associated beacon, VOR, GCA. In commercial or residential applications, this system is esthetically more suitable than parabolic reflectors due to its capability of flush mounting in structural facets of the structure. The system is directly applicable to space systems and terrestrial mobile systems. Of the uses of high energy generation for thermal process and/or direct irradiation are of no less importance in environmental protection applications for example PCB desctruction. The system capabilities of interest to the military, agencies involved in remote sight operations and/or environmental protection and industrial and commercial users, urban and rural.

The recent emphasis on satelite systems for inter-and intra-business telecommunications using VSAT (very small aperture terminals) will result in a high demand for the system capability derived in this invention which includes the options of either useful power availability or built in stand by power.

The device described above therefore provides a static-aperture autotracking solar array system incorporating the following features:
Incident solar radiation (solar flux) concentration;
Geocentric/geographic position determination for generation of program - track data;
Use of high incident radiation solar cells at high efficiency, reduced illumination time degradation, and required operational temperatures allowing use of associated cogeneration systems;
In thermal rather than photovoltaic concentrated flux (target) termination applications, including but not limited to detoxification, liquefaction, gasification and general waste destruction and/or providing energy inputs to associated systems or devices;
Modular construction for ease of maintenance of the basic system and/or as a matrix component;
Ease of portability for use in remote areas on a permanent or contingency basis;
Integrated with other system equipments requiring a mobile or stand by contingency energy source;
In particular system formats, the squirrel cage can provide a heat-exchanger for the collection and/or dissipation of heat by the fluid flow passing through the bars of the cylindrical squirrel cage structure .

The shape of the secondary reflector as described above is generally conical with the modification described above to accomodate the tracking system. In an alternative arrangement, not shown, the external shape of the generally conical secondary reflector may be hyperbolic or near-hyperbolic.

## Claims

1. Apparatus for collection and concentration of electromagnetic radiation comprising a primary reflector (25) having a reflective surface which is fixed, having a substantially longitudinal axis (26) parallel to the longitudinal extension of the surface which is open to one side to allow the radiation to enter from that one side and to be reflected generally toward the longitudinal axis (26), a secondary reflector (35) mounted coaxial to the axis (26) and having an external reflective surface (38) characterized in that the external reflective surface (38) of the secondary reflector (35) is generally conical so as to converge from a wider end surrounding the axis (26) toward a narrower end and is shaped and arranged so as to reflect radiation from the primary reflector (25) in a direction substantially parallel to the axis (26), and a third reflector (36) having a concave reflective surface mounted so as to receive the radiation from the second reflector (35) and shaped to converge the radiation by reflection toward a focus (58) for collection.

2. Apparatus according to claim 1 wherein the primary reflector (25) is cylindrical.

3. Apparatus according to claim 1 wherein the primary reflector (25) includes two halves which are symmetrical about a line parallel to the axis (26) with each half extending from the line to an outer edge (29, 30) with the outer edges (29, 30) thus defining together with a top (27) and a bottom edge (28) of the primary reflector (25) an area of incidence into which the radiation can be received.

4. Apparatus according to claim 3 wherein each half has a generator curve which is the involute of a circle.

5. Apparatus according to claim 1 including tunnel means (60) for receiving the radiation from the third reflector (36), the tunnel means (60) having a first end and a second end (61, 62) and an inner surface which is reflective and is arranged to converge from the first end to the second end to direct the radiation from the first end to a receiver (63) at the second end.

6. Apparatus according to claim 5 wherein the inner surface of the tunnel means (60) is exponentially shaped.

7. Apparatus according to claim 1 including means for moving the secondary reflector (35) relative to the primary reflector (25) so as to focus the reflected radiation from a source located at a predetermined position relative to the primary reflector (25), the secondary reflector (35) being moved in response to differences in location of the source.

8. Apparatus according to claim 7 wherein the secondary reflector (35) is substantially conical and wherein said moving means is arranged to tilt an axis of the conical shape.

9. Apparatus according to claim 8 wherein the secondary reflector (35) includes an axle member (41) extending along the axis thereof, an end of the axle member (41) remote from the apex of the conical shape being movable in two orthogonal directions generally at right angles to the axle member (41).

10. Apparatus according to claim 9 including a spherical bearing (43) at the apex (40) of the conical shape.

11. Apparatus according to claim 7 wherein the secondary reflector (35) includes, in transverse cross-section, two portions projecting substantially tangentially outwardly therefrom at diametrically opposed locations on the periphery thereof.

12. Apparatus according to claim 11 including means for rotating the secondary reflector (35) about the axis thereof.

13. Apparatus according to claim 1 including a fourth reflector (37) having a concave reflective surface mounted so as to receive the radiation from the third reflector (36) and having a focus substantially coincident with a focus (58) of the third reflector (36), the third reflector (36) having an opening (59) therein through which the radiation is caused to pass by the fourth reflector (37) for collection at the opening.

## Patentansprüche

1. Vorrichtung zum Sammeln und Konzentrieren von elektromagnetischer Strahlung mit einem ersten Reflektor (25), der eine reflektierende, feststehende Oberfläche und eine im wesentlichen in Längsrichtung verlaufende Achse (26) aufweist, die parallel zur Längserstreckung der Oberfläche verläuft, welche nach einer Seite hin offen ist, um der Strahlung von dieser einen Seite Einlaß zu gewähren, die dann im wesentlichen in Richtung der Längsachse (26) reflektiert wird, mit einem zweiten Reflektor (35), der koaxial zur Achse (26) angeordnet ist und eine äußere reflektierende Oberfläche (38) aufweist, dadurch gekennzeichnet, daß die äußere reflektierende Oberfläche (38) des zweiten Reflektors (35) im wesentlichen konisch ausgeformt ist, so daß sie von einem weiter außen liegenden Ende, welches die Achse (26) umgibt, zu einem weiter innen liegenden Ende konvergiert und eine derartige Gestalt aufweist und derart angeordnet ist, daß die vom ersten Reflektor (25) kommende Strahlung in eine im wesentlichen zur Achse (26) parallele Richtung reflektiert wird, und mit einem dritten Reflektor (36), der eine konkave reflektierende Oberfläche aufweist, die derart angeordnet ist, daß sie die Strahlung des zweiten Reflektors (35) empfängt und derart geformt ist, daß sie die Strahlung konvergiert, indem diese zur Sammlung in einen Focus (58) reflektiert wird.

2. Vorrichtung nach Anspruch 1, dadurch gekennzeichnet, daß der erste Reflektor (25) zylindrisch ist.

3. Vorrichtung nach Anspruch 1, dadurch gekennzeichnet, daß der erste Reflektor (25) zwei Hälften aufweist, die bezüglich einer zur Achse (26) parallelen Linie symmetrisch ausgebildet sind, wobei sich jede Hälfte von der Linie zu einer äußeren Kante (29, 30) erstreckt, wobei die äußeren Kanten (29, 30) zusammen mit einer Deckelkante (27) und einer Bodenkante (28) des ersten Reflektors (25) eine Wirkfläche bilden, in der die Strahlung aufgenommen werden kann.

4. Vorrichtung nach Anspruch 3, dadurch gekennzeichnet, daß jede Hälfte eine erzeugende Kurve aufweist, die die Evolvente eines Kreises ist.

5. Vorrichtung nach Anspruch 1, dadurch gekennzeichnet, daß Tunnelelemente (60) zur Aufnahme der Strahlung vom dritten Reflektor (36) vorgesehen sind, wobei die Tunnelelemente (60) ein erstes Ende und ein zweites Ende (61, 62) und eine innere Oberfläche aufweisen, die reflektierend ausgebildet ist und derart angeordnet ist, daß sie vom ersten Ende zum zeiten Ende konvergiert, um die Strahlung vom ersten Ende zu einem am zweiten Ende vorgesehen Empfänger (63) zu lenken.

6. Vorrichtung nach Anspruch 5, dadurch gekennzeichnet, daß die innere Oberfläche des Tunnelelements (60) exponentiell geformt ist.

7. Vorrichtung nach Anspruch 1, dadurch gekennzeichnet, daß Mittel zum Bewegen des zweiten Reflektors (35) relativ zum ersten Reflektors (25) vorgesehen sind, um die reflektierte Strahlung von einer an einer vorbestimmten Position relativ zum ersten Reflektor (25) vorgesehenen Strahlungsquelle zu fokussieren, wobei der zweite Reflektor (35) in Abhängigkeit von Positionsabweichungen von der Strahlungsquelle bewegt wird.

8. Vorrichtung nach Anspruch 7, dadurch gekennzeichnet, daß der zweite Reflektor (35) im wesentlichen konisch ausgebildet ist, und das Mittel zum Bewegen derart angeordnet ist, daß es die Achse der konischen Form verschwenkt.

9. Vorrichtung nach Anspruch 8, dadurch gekennzeichnet, daß der zweite Reflektor (35) ein Welle (41) aufweist, welche sich entlang dessen Achse erstreckt, wobei ein Ende der Welle (41), welches vom Scheitel der konischen Form entfernt liegt, in zwei zueinander orthogonale Richtungen und im wesentlichen in rechten Winkeln zur Welle (41) bewegbar ist.

10. Vorrichtung nach Anspruch 9, dadurch gekennzeichnet, daß am Scheitel (40) der konischen Form ein sphärisches Lager (43) vorgesehen ist.

11. Vorrichtung nach Anspruch 7, dadurch gekennzeichnet, daß der zweite Reflektor (35) im Querschnitt zwei Abschnitte aufweist, die an diametral gegenüberliegenden Positionen an dessen Umfang im wesentlichen tangential nach außen vorstehen.

12. Vorrichtung nach Anspruch 11, dadurch gekennzeichnet, daß Mittel zum Drehen des zweiten Reflektors (35) um dessen Achse vorgesehen sind.

13. Vorrichtung nach Anspruch 1, dadurch gekennzeichnet, daß ein vierter Reflektor (37) vorgesehen ist, der eine konkave reflektierende Oberfläche aufweist, die derart angeordnet ist, daß sie die Strahlung des dritten Reflektors (36) empfängt und einen Fokus aufweist, der im wesentlichen mit einem Fokus (58) des dritten Reflektor (36) zusammenfällt, wobei der dritte Reflektor (36) eine Öffnung (59) aufweist, durch welche die vom vierten Reflektor (37) kommende Strahlung gelenkt wird, um sie an der Öffnung zu sammeln.

## Revendications

1. Dispositif capteur et concentrateur de rayonnement électromagnétique comportant un premier réflecteur (25) à surface réfléchissante étant fixe, ledit réflecteur (25) présentant un axe (26) essentiellement longitudinal parallèl à l'extension longitudinal de la surface étant ouverte à un côté de manière à permettre au rayonnement d'entrer de ledit un côté et d'être reflété généralement vers l'axe longitudinal (26), un deuxième réflecteur (35) à surface extérieure réfléchissante (38) étant monté coaxialement à l'axe (26), caractérisé en ce que la surface extérieure réfléchissante du deuxième réflecteur (35) est généralement conique de manière à converger depuis une extrémité plus large entourant l'axe (26) jusqu'à une extrémité plus étroite. ladite surface étant taillée et disposée pour réfléchir du rayonnement du premier réflecteur (25) dans la direction essentiellement parallèle à l'axe (26), et un troisième réflecteur (36) à surface concave réfléchissante étant monté de manière à recevoir le rayonnement du deuxième réflecteur (35) étant taillé pour converger le rayonnement par réflexion vers un point de collection (58).

2. Dispositif selon revendication 1, caractérisé en ce que le premier réflecteur (25) est en forme cylindrique.

3. Dispositif selon revendication 1, caractérisé en ce que le premier réflecteur (25) comprend deux moitiés disposées symétriquement par rapport à une ligne parallèle à l'axe (26), chaque moite s'étendant depuis la ligne jusqu'à un bord extérieur (29, 30), les bords extérieurs (29, 30) avec un bord supérieur (27) et un bord inférieur (28) du premier réflecteur (25) définissant un plan d'incidence dans lequel le rayonnement peut être capter.

4. Dispositif selon revendication 3, caractérisé en ce que chaque moitié a une courbe génératrice étant la développante d'un cercle.

5. Dispositif selon revendication 1, caractérisé en ce qu'il comprend des moyens de tunnel (60) pour capter le rayonnement du troisième réflecteur (36), les moyens de tunnel (60) présentant une première extrémité et une deuxième extrémité (61, 62) et une surface intérieure réfléchissante étant disposée pour converger depuis la première extrémité jusqu'à la deuxième extrémité de manière à diriger le rayonnement depuis la première extrémité jusqu'à un récepteur (63) disposé à la deuxième extrémité.

6. Dispositif selon revendication 5, caractérisé en ce que la surface intérieure des moyens de tunnel (60) est en forme exponentielle.

7. Dispositif selon revendication 1, caractérisé en ce qu'il comporte des moyens pour déplacer le deuxième réflecteur (35) relativement au premier réflecteur (25) de manière à faire la mise au point du rayonnement réfléchi d'une source située à une position prédéterminée par rapport au premier réflecteur (25), le deuxième réflecteur étant déplacé en réponse aux différences de position de la source.

8. Dispositif selon revendication 7, caractérisé en ce que le deuxième réflecteur (35) est essentiellement conique et en ce que ledit moyen de déplacement est disposé pour incliner un axe de la forme conique.

9. Dispositif selon revendication 8, caractérisé en ce que le deuxième réflecteur (35) comprend un élément d'arbre (41) s'étendant le long de son axe, une extrémité du dit élément d'arbre (41), se trouvant éloignée de l'apex de la forme conique, peut être déplacer dans deux directions orthogonales se trouvant en général à l'angle droit par rapport à l'élément d'arbre (41).

10. Dispositif selon revendication 9, caractérisé en ce qu'il comporte un palier sphérique (43) situé à l'apex (40) de la forme conique.

11. Dispositif selon revendication 7, caractérisé en ce que, en coupe transversale, le deuxième réflecteur (35) comporte deux portions en faisant saillie essentiellement tangentiellement vers l'extérieur, se trouvant à sa périphérie dans des positions diamétralement opposées.

12. Dispositif selon revendication 11, caractérisé en ce qu'il comporte des moyens pour faire tourner le deuxième réflecteur (35) autour de son axe.

13. Dispositif selon revendication 1, caractérisé en ce qu'il comporte un quatrième réflecteur (37) à surface concave réfléchissante étant monté pour capter le rayonnement du troisième réflecteur (36) et présentant un point essentiellement coïncidant avec un point (58) du troisième réflecteur (36), le troisième réflecteur (36) comportant une orifice (59) par laquelle le rayonnement est causé de passer grâce au quatrième réflecteur pour capter le rayonnement à l'orifice.
